# EUROPEAN PATENT APPLICATION

(11) **EP 4 442 745 A1**
(43) Date of publication of application: **09.10.2024**
(21) Application number: 23167223.9
(22) Date of filing: 07.04.2023
(51) Int. Cl.: C08K 3/04, B60C 1/00, C08K 3/36, C08K 11/00

(54) **RECYCLING PLANT, CORRESPONDING METHOD, COMPOSITION AND TYRES**

(71) Applicant: E.T.I.A.-Evaluation Technologique, Ingenierie et Applications, 60201 Compiegne (FR); Murfitts Industries LTD, Lakenheath, Suffolk IP27 9AD (GB)
(72) Inventor: Lepez, Olivier, 60201 COMPIEGNE CEDEX (FR); Sajet, Philippe, 60201 COMPIEGNE CEDEX (FR); Murfitt, Mark, Lakenheath, IP27 9AD (GB); Norris, Chris, Lakenheath, IP27 9AD (GB)
(74) Representative: Cabinet Boettcher

(57) **Abstract**

The invention relates to a recycling installation comprising at least one first thermal treatment device rubber-based granulates, a second thermal treatment device product coming from the first device.

The invention also relates to a corresponding method, a composition, and a tyre.

## Description

The present invention relates to a rubber-based tyre recycling method.

The present invention also relates to an installation that implements such a recycling method.

The invention also relates to a composition for manufacturing a tyre comprising recovered carbon black (RCB) as well as a tyre manufactured from such a composition.

### BACKGROUND OF THE INVENTION

Millions of tyres arrive at the end of life each year in Europe.

Recycling these tyres is therefore a real ecological challenge.

Different types of tyre recycling are known today.

One of them consists of manufacturing recovered carbon black (RCB) which can then be used in various applications.

To manufacture RCB, used tyres are usually peeled in order to separate the main component (a matrix made of at least one rubber material and at least two reinforcing fillers, which are carbon black and silica) of the ancillary macroscopic components (textile fibre, metal shell, etc.).

Ususally the main component is pyrolysed to obtain RCB .

Unfortunately, the RCB obtained is generally of average quality and can thus only be used for certain limiting applications, like for example as fillers in non technical goods such as rubber mats or pigments for paints or inks.

### OBJECT OF THE INVENTION

An aim of the invention is to propose a method for recycling rubber-based tyres which enables a more efficient recycling of said product.

An aim of the invention is to propose an installation that implements such a method.

An aim of the invention is also to propose a composition for manufacturing a tyre comprising recovered carbon black (RCB) of a better quality.

An aim of the invention is also to propose a tyre manufactured from such a composition.

### SUMMARY OF THE INVENTION

In view of achieving this aim, amethod for recycling a rubber-based tyre is proposed, the method comprising at least the following steps:
- in a first step thermally treating rubber-based granulates coming from the tyre into at least a first device, by moving the granulates inside the first device while heating said granulates, so as to decomposate the granulates and to collect solid residues coming from the thermal treatment of granulates at a first outlet of the first device and gaseous subproducts coming from the thermal treatment of granulates at a second outlet of the first device,
- in a second step thermally treating said solid residues, by moving the solid residues inside at least a second device while heating said solid residues at a temperature that is greater that the one in the first step, so as to clean the residues, the second device being connected to the first device so that the second step occurs just after the first step.

The inventors have been able to observe that, the action of thermally treating the granulates two times, made it possible to greatly improve the quality of the product collected after the second device.

In particular, the fact to implement the second step directly after the first step in addition to an higher temperature in the second device permits to avoid cooling of the solid residues which improve the quality of the product collected after the second device.

Moreover collecting the gaseous subproducts at the level of the first device permits also to remove volatile elements with these gaseous subproducts. Therefore, in the second device, there no or few volatile elements which also improve the quality of the product collected after the second device.

The product collected after the second device is therefore of very good quality.

For example the product collected after the second device if at least cleaner that the ones manufactured by prior art methods.
For example the product collected after the second device could better interact with other substances in a new composition, these substances being for example to reinforce said product. In particular, the inventors have been able to observe that this made it possible to be able to use the product thus obtained to manufacture new tyres.

In particular, the inventors have been able to observe that the product thus obtained was of a so good quality that it could be used to replace, in a standard composition for tyres, at least partially not only "virgin" carbon black (referenced below simply as CB), but also "virgin" silica (referenced below simply as "silica").

The invention thus makes it possible to very efficiently recycle a rubber-based tyre.

The present invention concerns also a composition comprising, for 100 parts by weight of the composition, less than 6 parts by weight of silica. Preferably, the composition according to the invention comprises for 100 parts of fillers present in the composition, between 20 and 50 parts of recovered carbon black. More preferably, the composition of the invention comprises for 100 parts by weight of the composition, at least:
60 and 70 parts by weight of a rubber matrix,
between 0 and 13 parts by weight of carbon black,
between 0 and 6 parts by weight of silica,
between 10 and 30 parts by weight of recovered carbon black.

Preferably, the composition of the invention, comprises for 100 parts by weight of the composition, at least:
60 and 70 parts by weight of a rubber matrix,
between 5 and 13 parts by weight of carbon black,
between 2 and 6 parts by weight of silica,
between 10 and 30 parts by weight of recovered carbon black.

The recovered carbon black of the composition of the invention comprises between 20 and 35 parts by weight of silica. Preferably, the recovered carbon black comprises between 25 and 30 parts by weight of silica.

The composition of the invention could comprise between 0 and 5 parts by weight of N700 and N600 as carbon black. The recovered carbon black of the composition of the invention presents an external surface area greater than 70 square meters per gram, preferably than 80 square meters per gram.

The recovered carbon black of the composition of the invention presents less than 1 part of weight of benzo-α-pyrene.

The invention concerns also a tyre manufactured from a composition of the invention, the tyre is a vehicle tyre, preferably a car tyre or a truck tyre.

Other features and advantages of the invention will emerge upon reading the following description of a particular, non-limiting embodiment of the invention.

### BRIEF DESCRIPTION OF THE DRAWINGS

The invention will be best understood in the light of the following description, in reference to the accompanying figures, among which:
[Fig. 1] Figure 1 is a schematic view of an installation according to a particular embodiment of the invention,
[Fig. 2] Figure 2 is a schematic, cross-sectional view of a thermal treatment device of the installation illustrated in figure 1,
[Fig. 3] Figure 3 is a flowchart having at least some of the steps of a method implemented in the installation illustrated in figure 1.

### DETAILED DESCRIPTION OF THE INVENTION

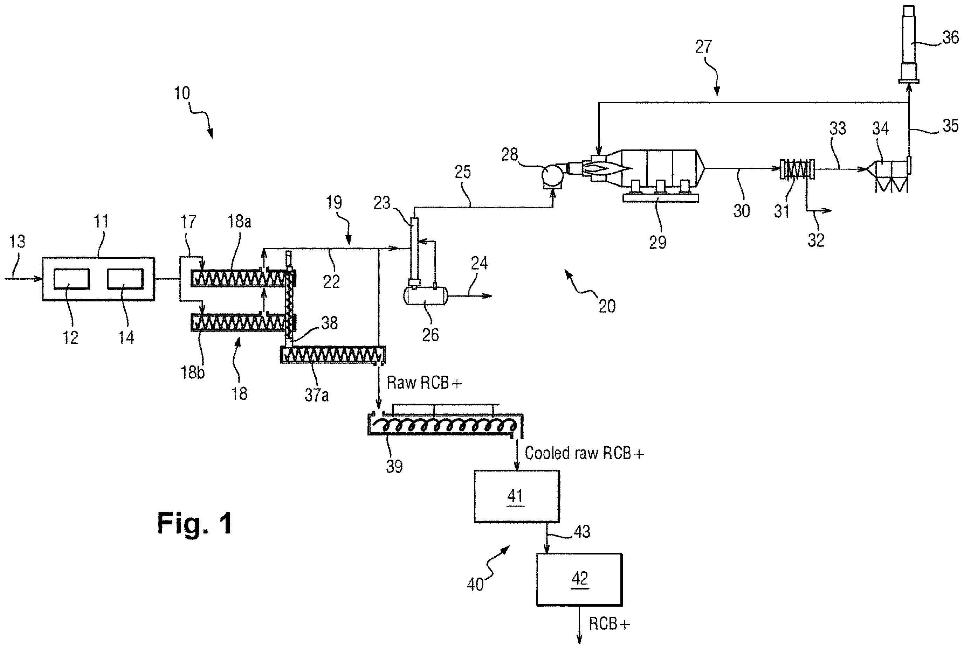

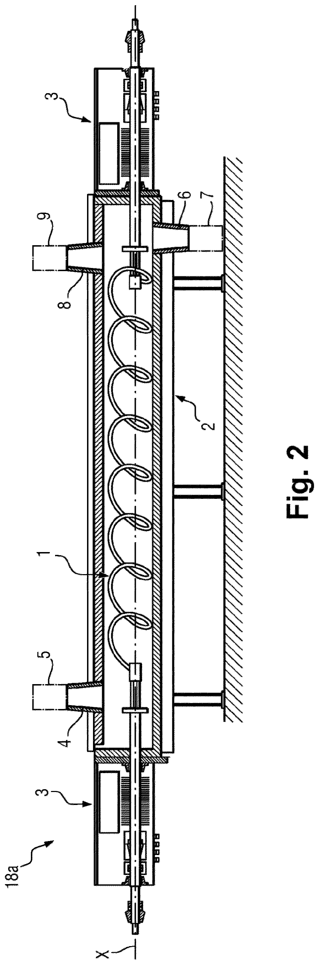

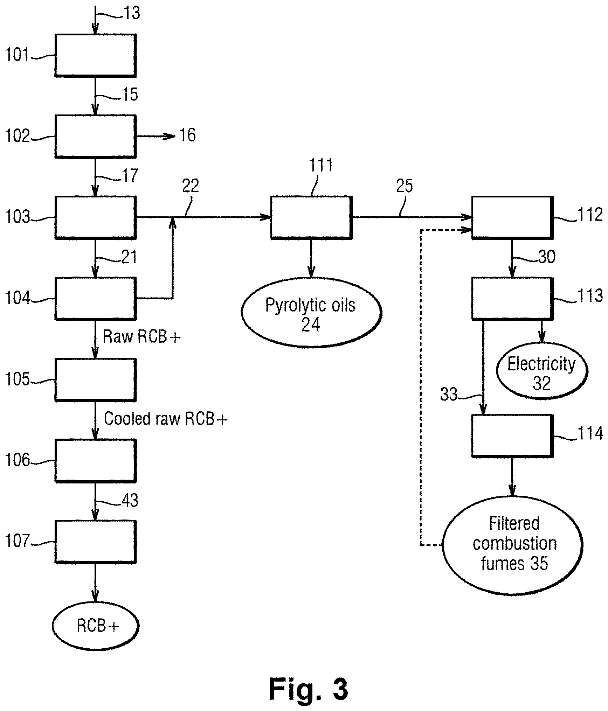

In figures 1 and 2, an installation for recycling a rubber-based product is represented according to a particular embodiment of the invention, generally referenced as 10. The recycling method implemented by such an installation 10 will be jointly described in reference to figure 3.

The installation 10 is, in this case, intended to recycle used tyres 13, but this application is not naturally limiting and the installation 10 can be intended to recycle other types of rubber-based products, like for example sheaths, seals, etc.

Preferablue, the installation 10 is intented to recycle used tyres 13 that are cars used tyres 13 or other used tyres 13 with a high silica content (for example used tyres that contain at least 25 parts of weight of silica - and preferably at least 30 parts of weight of silica - for 100 parts of weight of used tyres) but this application is not naturally limiting and the installation 10 can be intended to recycle other types of used tyres, like for example truck tyres or used tyres with a lower silica content.

The installation 10 comprises, in this case, a system 11 for pre-treating used tyres 13 collected beforehand.

To this end, the pre-treatment system 11 comprises a peeling device 12. During a first step 101 carried out by way of said peeling device 12, the collected tyres 13 are peeled, in order to separate the main component 15 (an assembly of a rubber matrix and at least two fillers which are carbon black and silica), ancillary macroscopic components 16 (textile fibre, metal shell, etc.). The ancillary macroscopic components can themselves form the subject of a recycling within the installation 10 or outside of the installation 10.

The pre-treatment system 11 also comprises a granulation device 14 connected to the peeling device. Thus, during a second step 102 carried out by way of the granulation device 14, the main component 15 is shaped in granulates 17.

This will facilitate its recycling.

Preferably, during the second step 102, the main component 15 is shaped in granulates 17 having an average diameter less than 8 millimeters and preferably less than 6 millimeters.

It is indeed preferable to have granulates 17 of relatively small dimensions to facilitate their recycling.

The installation 10 moreover comprises a first family 18 of at least one thermal treatment device granulates 17 coming from the pre-treatment system 11.

Preferably, the first family 18 comprises at least two devices 18a, 18b for thermally treating granulates 17 coming from the pre-treatment system 11. The first family 18 comprises, for example, between 2 and 10 and preferably between 2 and 5, and for example between 2 and 3 thermal treatment device granulates 17 coming from the pre-treatment system 11.

The different thermal treatment device of the first family 18 are arranged in parallel: all the thermal treatment device of the first family 18 are thus connected to the pre-treatment system 11 to thermally treat the granulates 17 in parallel.

The different thermal treatment devices within the first family 18 are preferably identical to one another. The following description of one of the devices 18a is therefore also applicable to the other devices, in this case 18b.

The device 18a comprises an enclosure 2, of mainly horizontal general direction, which is maintained at a distance from the ground by feet.

The enclosure 2 comprises at least one inlet 4 arranged in the cover of the enclosure 2 substantially at the level of a first longitudinal end of the enclosure 2. According to a particular embodiment, the device comprises an inlet funnel 5 which is sealingly connected to the inlet 4 of the enclosure.

The inlet funnel 5 is thus connected to the pre-treatment system 11.

The enclosure 2 further comprises at least one first outlet 6 arranged, in this case, in the bottom of the enclosure 2 substantially at the level of the second of the two longitudinal ends of the enclosure 2.

According to a particular embodiment, the device comprises a first outlet funnel 7 which is sealingly connected to the first outlet 6 of the enclosure 2 to collect solid residues coming from the thermal treatment performed in the enclosure.

The enclosure 2 comprises, in this case, a second outlet 8 for collecting gaseous subproducts coming from the thermal treatment of granulates.

According to a particular embodiment, the device 18a comprises an outlet funnel 9 which is sealingly connected to the second outlet 8 of the enclosure 2.

The enclosure 2 is, for example, made of metal material. Typically, the enclosure 2 is made of steel, like stainless steel, and for example, non-magnetic.

Boxes 3 are fixed to each of the longitudinal ends of the enclosure 2.

The device 1 comprises a screw 1 having a longitudinal axis X and mounted to rotate about said longitudinal axis X in the enclosure 2, the longitudinal axis X being, in this case, parallel to the general direction of the enclosure 2. The longitudinal axis X is therefore, in this case, horizontal.

In this case, the screw 1 has a helical coil shape which is fixed to its two ends at the tip of a shaft section, but this naturally only constitutes one example, and any other helical-type geometry can be used.

The screw 1 itself thus has no shaft, strictly speaking.

Each shaft section is connected to its other end, to a coaxial shaft which passes into the associated box.

Each box 3 is equipped with means serving to rotate the screw 1, as well as means ensuring the powering of the screw 1 such that this forms a Joule-effect heating means. The screw 1 therefore constitutes a heating transfer means.

To this end, the screw 1 is formed in its mass of an electrically conductive material.

Thus, during a third step 103, implemented by the first family 18, the granulates 17 are thermally treated within each enclosure 2.

In particular, for each enclosure 2, the screw 10 moves the granulates 17 between the first inlet 4 and the first outlet 6 while heating said granulates 17.

This enables a thermal treatment of the granulates 17 has proven to be very effective due to the granulates 17 being both stirred and heated.

One single passage into one of the thermal treatment device of the first family 18 is, in this case, necessary during this third step 103.

The thermal treatment parameters performed by each thermal treatment device 18a, 18b are identical for each of the thermal treatment device of the first family 18. Thus, the thermal treatment of granulates 17 is identical, whatever the thermal treatment device of the first family 18 in question.

Preferably, each device for thermally heating of the first family 18 is, in this case, shaped to pyrolyse the granulates 17 that it conveys. It is reminded that a pyrolysis consists of increasing the temperature of a compound A (for example, an organic compound), in an atmosphere without oxygene or very few oxygene, to decompose it into several sub-compounds B1, B2, B3, etc., different from the initial compound A.

In the present case, each thermal treatment device of the first family 18 is, in this case, shaped such that the temperature reached in the enclosure 2 in question is at least 350°C and preferably, at least 400°C (here and thereafter "temperature in the enclosure" refers to the setpoint temperature of the screw arranged inside the enclosure and/or the temperature at the ceiling of the enclosure). Typically, said temperature is between 350 and 800°C and is, for example, between 350 and 500°C and is, for example, between 350 and 450°C and is, for example, between 400 and 450°C.

The temperature in the enclosure 2 is maintained constant over time. However, the granulates 17 heat progressively as they progress in the enclosure 2 in question, due to their contact with the screw 1.

Moreover, each thermal treatment device of the first family 18 is also shaped such that the granulates 17 remain between 10 minutes and 1 hour in the enclosure in question, and for example, between 20 and 40 minutes, and for example, between 25 and 35 minutes, and for example, 30 minutes.

Typically, each thermal treatment device of the first family 18 is formed such that the granulates 17 remain between 25 and 60 minutes in the enclosure 1 in question for a temperature of the enclosure 1 of between 400 and 450°C.

The granulates 17 are thus heated to moderate temperatures over a relatively long time, which optimises their treatment.

Coming from this third step 103, at the first outlets 6, solid residues 21 are collected, and at the second outlets 8, gaseous subproducts 22 are collected.

The different second outlets 8 of all the thermal treatment device of the first family 18 are connected to one same general outlet 19 belonging to the installation 10.

The installation preferably comprises at least one system 20 for post-treating gaseous subproducts 22 in order to be able to enhance them.

Preferably, the post-treatment system 20 comprises a condensation device 23 which is therefore connected, in this case, to the general outlet 19. During a first phase 111, the gaseous subproducts 22 are cooled and/or lowered in pressure, which makes it possible to collect the condensable phases of said subproducts. The condensation device 23 comprises, for example, a cooling column, a scrubber, etc.

Thus, pyrolytic oils 24 are collected (the condensable phases) from one side, and the non-condensable phases 25 from the other. More specifically, thus, in this case, pyrolytic oils 24 are collected in the lower part of the condensation device 23 and the non-condensable phases 25 in the upper part of the condensation device 23.

In the present case, the installation 10 comprises a reservoir 26 for storing pyrolytic oils 24 which is connected to an outlet of the condensation device 23 to collect the pyrolytic oils 24 (optionally by means of one or more intermediate treatment phases, such as a filtering, an additional cooling, etc.). More specifically, in this case, the reservoir 26 is connected to the lower part of the condensation device 23.

Preferably, the reservoir 26 is also connected to a second inlet of the condensation device 23 (the first inlet being that connected to the general outlet 19) such that a proportion of the pyrolytic oils 24 obtained is reinjected into the condensation device 23 to facilitate the condensation of the gaseous subproducts 22. For example, the condensation device 23 comprises a wet scrubber: the scrubber thus humidifies the gaseous subproducts 22 at least by the pyrolytic oils 24 (potentially mixed with a solvent) obtained from the reservoir 26.

The treatment of the gaseous subproducts 22 has thus proven particularly effective.

The pyrolytic oils 24 present in the reservoir 23 can moreover be used to be enhanced (optionally by means of one or more additional post-treatment phases, such as a filtering, an additional cooling, etc.).

Preferably, the post-treatment system 20 also comprises a device 27 for managing non-condensable phases 25. This management device 27 is, for example, connected to an upper outlet of the condensation device 23.

The management device 27 comprises, for example, an extractor fan 28 operating by suction and adjusted to keep the condensation device 23 depressed. This makes it possible to perform a forced extraction of the non-condensable phases 25. It is therefore, in this case, the extractor fan 28 which is connected to the upper outlet of the condensation device 23.

The management device 27 also comprises a combustion furnace 29 arranged downstream from the extractor fan 28. At the outlet of the extractor fan 28, the non-condensable phases 25 are therefore sent into the combustion furnace 29, in which a combustion of said phases is performed, during a second phase 112, by at least one burner (gas, fuel oil, biomass, etc.).

At the outlet of the combustion furnace 29, burning combustion fumes 30 are thus collected.

Preferably, the management device 27 comprises an Organic Rankine Cycle module 31 connected to the outlet of the combustion furnace 28 to transform the heat from the combustion fumes into electrical energy 32 during a third phase 113.

This makes it possible to enhance even the non-condensable phases 25.

Preferably, at least some of the electrical energy 32 generated in the management device 27 is used to power all or part of the installation 1.

The installation 1 has thus proven particularly interesting from an energy standpoint.

Moreover, the management device 27 comprises one or more cooled combustion fume treatment modules 33 at the outlet of the Organic Rankine Cycle module 31 and, for example, at least one filtering module 34 which is connected to the outlet of the Organic Rankine Cycle module 31. The filtering module 34 is, for example, a baghouse-type filtering module.

During a fourth phase 114, the cooled combustion fumes 33 are thus cooled in the filtering module 34.

The filtered combustion fumes 35 at the outlet of the filtering module 34 can thus be discharged through a discharge funnel 36 from the installation 1 to the outside.

Preferably, the installation 1 is shaped such that some of the filtered combustion fumes 35 are removed before reaching the discharge funnel 36 to be able to be reinjected into the combustion furnace 29.

This makes it possible to more easily maintain the combustion performed in said combustion furnace 29.

The installation 1 has thus proven particularly interesting from an energy standpoint.

The continuation of recycling solid residues coming from the first pyrolysis 103 will now be described.

The different first outlets 8 of all the thermal treatment device of the first family 18 are connected to at least one thermal treatment device a second family 37 of thermal treatment device of the installation 1. In the present case, the second family 37 only comprises one single thermal treatment device 37a.

For example, the different outlets of the thermal treatment device of the first family 18 are connected to a worm screw 38 itself connected to one single device 37a for thermally treating of the second family 37 simply referenced second thermal treatment device 37a below.

All the first outlets 8 of the thermal treatment device of the first family 18 are thus connected to the same second thermal treatment device 37a and, in particular, to one same inlet of said second device 37a. For example, all the first outlets 8 of the thermal treatment device of the first family 18 open out into the worm screw 38 which drives the solid residues to an inlet 6 of the second thermal treatment device 37a.

Preferably, the second thermal treatment device 37a is identical to at least one of the thermal treatment device of the first family 18. Thus, what has been indicated above for one of the thermal treatment device of the first family 18 is also applicable to the second thermal treatment device 37a.

During a fourth step 104, implemented in the second thermal treatment device 37a, the screw of said device moves the solid residues 21 between the first inlet and the first outlet of the enclosure of said device, while heating said solid residues 21.

This enables a thermal treatment of the solid residues 21 which has proven to be very effective due to the solid residues 21 being both stirred and heated.

One single passages into the second thermal treatment device 37a is, in this caese, necessary during this fourth step 104.

Preferably, the second thermal treatment device 37a is a "finisher" i.e. the second thermal treatment device 37a finishes the thermal treatment of the solid residues. In particular, the second thermal treatment device is shaped to clean the solid residues 21 and in particular to clean the surfaces of silica and carbon elements present in the solid residues 21.

One of the advantage to clean said surfaces is to make them more activatable by coupling agents in future compositions (compositions that would be described below).

The parameters of the thermal treatment performed by the second thermal treatment device 37a are thus different from those performed by the thermal treatment device of the first family 18.

In the present case, the thermal treatment device 37a is shaped such that the temperature reached in its enclosure is at least 500°C and preferably, at least 600°C. Typically, said temperature is between 500 and 1000°C, and is for example, between 500 and 800°C, and is for example, between 600 and 650°C, and is for example, between 620 and 650°C.

The temperature in the enclosure of the second thermal treatment device 37a is maintained constant over time. However, the solid residues 21 heat progressively as their progress in said enclosure due to their contacts with the screw of the second thermal treatment device 37a.

The second thermal treatment device 37a is necessarily shaped such that the temperature reached in its enclosure is greater than that reached in the enclosures 2 of the first family 18.

Moreover, the second thermal treatment device 37a is also shaped such that the solid residues 21 remain between 1 and 20 minutes in the enclosure, and for example, between 5 and 10 minutes, and for example, between 6 and 7 minutes.

The second thermal treatment device 37a is, in this case, formed such that the solid residues 21 remain for a shorter time in their enclosure than in the enclosures 2 of the first family 18.

Typically, the second thermal treatment device 37a is shaped such that the solid residues 21 remain between 6 and 7 minutes in their enclosure 1 at a temperature of between 620 and 680°C.

Opposing the third step 103, during the fourth step 104, the solid residues 21 are heated to high temperatures over a relatively short time, which optimises their treatments.

Coming from this fourth step 104, at the first outlet of the second thermal treatment device 37a, a raw RCB is collected, that will be called raw RCB+ below (to distinguish them from the raw RCB granulates from the prior art), and of the gaseous subproducts 22 at the second outlet.

It should be noted that the different outlets of the thermal treatment device of the first family 18 are all connected direclyt to the second thermal treatment device 37a. There is no thermal treatment device between the first family 18 and the second thermal treatment device 37a. In particular there is no cooling of solid residues the first family 18 and the second thermal treatment device 37a.

Preferably, the second outlet of the second thermal treatment device 37a is connected to the post-treatment system 20 (either by directly or by way of the general outlet 19) in order to follow the same path as the gaseous subproducts 22 coming from the first family 18.

The installation 1 moreover comprises a cooling device 39 connected to the outlet of the enclosure of the second thermal treatment device 37a.

The cooling device 39 comprises, for example, a screw rotated about a longitudinal axis and through which a cooling fluid circulates.

The screw thus both makes it possible to cool and to move the raw RCB+ in the cooling device 39 enabling a rapid cooling of the raw RCB+.

For example, the raw RCB+ remains between 2 and 30 minutes in the cooling device 39.

Thus, during a fifth step 105 implemented in the cooling device 39, the raw RCB+ is cooled.

The cooled raw RCB+ can subsequently be handled in total safety.

Preferably, the installation 1 comprises a post-treatment system 40 connected to the outlet of the cooling device 39.

The post-treatment system 40 thus comprises a grinding device 41 connected to the outlet of the cooling device 39. The grinding device 41 comprises, for example, a centrifugal grinder or jet mill grinder.

During a sixth step 106, implemented in the grinding device 41, the cooled raw RCB+ is transformed into a powder 43. For example, the cooled raw RCB+ is ground into a powder 43, the particles of which have an average diameter less than 15 micrometers and for example less than 10 micrometers.

This permits a better dispersion in a future composition.

The post-treatment system 40 preferably comprises a granulation device 42 connected to the outlet of the grinding device 41.

During a seventh step 107, implemented in the granulation device 42, the powder 43 is thus transformed into RCB+ granulates and simply called RCB+ below. It is therefore noted that there is a difference between the raw RCB+ obtained from the fourth step 104 (second pyrolysis) and the RCB+ obtained from the seventh step 107 (post-treatment granulation).

The seventh step of granulation 107 makes it possible, in particular, to facilitate the handling of RCB+.

In this case, it is reminded that thermal treatment of used tyres necessarily can cause violent reactions with oxygen. Consequently, at least one part of the installation 1 (and in particular, at least the part of the installation comprised between the inlets 6 of the different enclosures 2 of the first family 18 and the outlet of the cooling device 39) is configured to ensure a sealing between the outside air this part of the installation. Preferable, at least the part of the installation comprised between the inlets 6 of the different enclosures 2 of the first family 18 and .
- the outlet of the cooling device 39,
- the reservoir 26,
- the combustion furnace 29,
is configured to ensure a sealing between the outside air this part of the installation.

To this end, sluice valves, airlocks, etc. can assist, for connecting inlets and outlets of the different elements in question of the installation 1.

Moreover, at least one part of the installation 1 (and in particular, at least the part of the installation comprised between the inlets 6 of the different enclosures 2 of the first family 18 and the outlet of the cooling device 39) is configured to work in an atmosphere without oxygen. Preferable, at least the part of the installation comprised between the inlets 6 of the different enclosures 2 of the first family 18 and :
- the outlet of the cooling device 39,
- the reservoir 26,
- the combustion furnace 29,
is configured to work in an atmosphere without oxygen.

To this end, the installation 1 can be provided with one or more circuits for circulating a neutral gas (nitrogen or other) in the different elements in question of the installation 1.

Alternatively or complementarily, at least one part of the installation 1 (and in particular, at least the part of the installation 1 comprised between the inlets of the different enclosures of the first family 18 and the outlet of the cooling device 39) is configured to work at a pressure lower than ambient pressure. This enables a better extraction of the volatile matters present in the enclosures (by way of the gaseous subproducts) which could impede the pyrolysis of granulates 17 or of the solid residues 21.

The installation 1 thus described, and the associated method, enable a very good recycling of used tyres.

At the outlet of the installation 1, for 100 parts by weight of user granulates 17, for example between 30 and 40 parts by weight of RCB+, between 30 and 45 parts by weight of pyrolytic oils 24, and between 23 and 28 parts by weight of non-condensable gases 25 can thus be collected, which could however enable the generation of electric energy 32 (the sum of the parts by weight of RCB+, pyrolytic oils 24 and of non-condensable gases 25 naturally not being able to exceed 100 parts). These intervals are only examples and so do not limit the invention (as the the collection of pyrolytic oils 24, non-condensable gases 25 and RCB+ depend on thermal treatment parameters and the initial composition of the used tyres 13 and on the composition of the feedstock).

Moreover, raw RCB+ like RCB+ both have interesting features.

The properties of RCB+ are presented below in table 1.

| Property | Unit | Test Method | Value |
|---|---|---|---|
| Total Surface Area (BET) | m2/g | ASTM D6556 | ≥80 |
| External Surface Area (STSA) | m2/g | ASTM D6556 | ≥70 |
| Toluene Discolouration | % | ASTM D1618 | >95 |
| Volatile Content | % | ASTM D8474 | <1.5 |
| Fixed Carbon Content | % | ASTM D8474 | 64 to 70 |
| Ash Content | % | ASTM D8474 | ≥28 |
| Ash Content | % | ASTM D1506 | ≥28 |
| Heat Loss | % | ASTM D1509 | <1 |
| Average Pellet Hardness | gf | ASTM D5230 | 38 |
| Maximum (5) Pellet Hardness | gf | ASTM D5230 | 70 |
| Fines Content | % | ASTM D1508 | <7 |
| Pour Density | kg/m3 | ASTM D1513 | 450 |
| Sieve Residue #325 | ppm | ASTM D1514 | <100 |

It is thus noted that RCB+ have a low content of volatile materials. In particular, raw RCB+ and RCB+ are of ultra low aromatic hydrocarbon content (PAH). For example per 100 parts by weight of RCB+ or of raw RCB+, there is less than 1 part of weight of benzo-α-pyrene and preferably less than 0.5 part of weight of benzo-α-pyrene.

This is demonstrated by a direct measurement by thermogravimetric analysis (ASTM D8474) and by the absence of organic residues decolouring the toluene (ASTM D1618).

RCB+ can thus be handled safely.

Furthermore, RCB+ has an increased available surface area. In fact the external surface area value (STSA) is different to the value of the total surface area (BET) which means the pores of the RCB+ are largely free of residues and in particular of organic residue.

The inventors have thus been able to observe that the installation 1 and the method described above made it possible to clean very well the surface of the silica as well as the CB during recycling.

Thanks to that, the surface area of RCB+ is close to that of a duo of virgin fillers (virgin CB + virgin silica) - that will simply be called duo of virgin fillers below - used to manufacture a new tyre. Below, by filler, this means all silicas (virgin or coming from a recycling) added with all carbon blacks (virgin or coming from a recycling) present in a composition.

RCB+ is thus directly reusable, as such for the manufacture of new tyres and even new vehicle tyres and even new cars and trucks vehicle tyres.

When RCB+ is used to manufacture a new tyre, it enters into a composition such that, for 100 parts by weight of the composition, the composition preferably comprises at least:
between 60 and 70 parts by weight of a matrix composed of one or more rubbers,
less than 15 parts by weight of virgin CB,
less than 7 parts by weight of virgin silica, and preferably less than 6 parts by weight of virgin silica,
at least 10 parts by weight of RCB+ and preferably at least 12 parts by weight of RCB+,
around 4 parts by weight of other components, and for example, 4 parts by weight of inorganic material other than silica (zinc oxide, for example).

For example, the composition comprises, for 100 parts by weight of the composition, at least:
between 60 and 70 parts by weight of a matrix composed of one or more rubbers,
between 0 and 13 parts by weight of virgin CB,
between 0 and 6 parts by weight of virgin silica,
between 10 and 30 parts by weight of RCB+,
around 4 parts by weight of other components, and for example, 4 parts by weight of inorganic material other than silica (zinc oxide, for example).

For information, in Europe, new tyres are manufactured with the basis of a composition comprising, for 100 parts by weight of the composition, between 30 and 37 parts by weight of the duo of virgin fillers.

To simplify, in Europe, a standard new car tyre is manufactured with the basis of a composition comprising, on average (at most or least about 2 parts), for 100 parts by weight of the composition:
around 63 parts of a matrix composed of one or more rubbers,
around 23 parts of virgin CB,
around 10 parts of virgin silica,
around 4 parts of inorganic material other than silica (zinc oxide, for example).

It is therefore seen that the RCB+ advantageously makes it possible to use less virgin CB and, surprisingly, less virgin silica also.

Indeed, RCB+ itself comprises silica, which makes it particularly interesting. The inventors have been able to observe that RCB+ contained, for 100 parts by weight of RCB+, between 20 and 35 parts by weight of silica and more specifically, between 25 and 30 parts by weight of silica. The remainder of the parts by weight of RCB+ are parts by weight of carbon (at most or least 1 part by weight of other components such as additive remainders, for example).

In addition, as indicated above, the silica of the RCB+ has a good surface state.

Subsequently, the silica of the RCB+ can interact correctly with one or more coupling agents usually used for manufacturing tyres (like Bis(triethoxysilylpropyl)tetrasulfide otherwise known as TESPT and Si-69) in the same way as a "virgin" silica. In particular, the silica of RCB+ enhances filler-polymer interactions whilst reducing filler-filler interactions and energy losses after reaction such a coupling agent.

In this way, and as already indicated, RCB+ can replace not only virgin CB, but also virgin silica.

This is advantageous, as silica is a relatively expensive raw material and there is a lack of sustainable alternatives to silica available in the industry.

Thus, for 100 parts by weight of the duo of virgin fillers present in a standard tyre composition, at least 25 parts by weight are replaced by 25 parts by weight of RCB+ and preferably at least 30 parts by weight and preferably at least 35 parts (knowing that preferably at least some of the parts of the virgin silica are replaced by RCB+).

Thus, for 100 parts by weight of the duo of virgin fillers present in a standard tyre composition, between 25 parts and 50 by weight are replaced by an identical number of parts of RCB+ and preferably between 25 and 45 parts by weight, and preferably between 25 and 40 parts (knowing that preferably at least some of the parts of the virgin silica are replaced by RCB+).

Thus, for 100 parts by weight of virgin silica present in a standard tyre composition, at least 25 parts by weight are replaced by an identical number of parts of RCB+ and preferably at least 40 parts by weight, and preferably at least 50 parts by weight, and preferably at least 60 parts by weight.

The inventors have thus been able to observe that RCB+ was of a really good quality that it was possible to be able to propose a tyre composition comprising 0 parts of "virgin" silica thanks to the use of RCB+. However, preferably, the tyre composition comprising at least 1 part of "virgin" silica in addition to the use of RCB+. Thus, for 100 parts by weight of virgin silica present in a standard tyre composition, between 25 and 95 parts by weight are replaced by an identical number of parts of RCB+ and preferably between 40 and 95 parts by weight, and preferably between 50 and 95 parts by weight, and preferably between 60 and 95 parts by weight.

Moreover, RCB+ has proven to be a very good replacement for virgin CB of classification N700 or N600. RCB+ can also at least in parts replace other virgin CBs such as N500 or N300.

Preferably, for 100 parts of a standard composition of a manufacturer, RCB+ replaces:
at least 90% of the parts by weight of virgin CBs N700 and N600 normally used in said composition, and preferably 100% of said parts, and/or
between 0 and 30% of parts by weight of virgin CBs N500 normally used in said composition, and preferably between 0 and 25% of said parts, and/or
between 0 and 10% of the parts by weight of virgin CBs N500 normally used in said composition, and preferably between 0 and 5% of said parts.

Possible compositions for a standard new tyre and a new tyre with RCB are given in the table below:

| | Standard composition | Composition according to a particular embodiment of the invention |
|---|---|---|
| Rubber matrix | 64.7 | 64.7 |
| RCB+ | 0 | 13.2 |
| CB N300 | 11.3 | 10.7 |
| CB N500 | 2.4 | 1.8 |
| CB N700 and/or N600 | 6.4 | 0 |
| Silica | 11.2 | 5.6 |
| Others | 4 | 4 |

Once again, it can therefore be seen that RCB+ not only makes it possible to replace virgin CB, but also silica and this, significantly.

The invention is not limited to the embodiments which has just been described, but on the contrary, includes any variant having, with equivalent means, the main features stated above.

In particular, the installation can comprise one or more other additional modules than those indicated, for example, for the post-treatment of pyrolytic oils, non-condensable phases or RCB+ that is raw or not. The installation can, for example, comprise a granulate cleaning module coming from used tyres, module arranged upstream from the first thermal treatment device.

Each thermal treatment device family can comprise a number of the thermal treatment devices which is different from what has been indicated.

## Claims

**1.** Composition for manufacturing a tyre, the composition comprising, for 100 parts by weight of the composition, at least:
between 60 and 70 parts of a rubber matrix,
less than 15 parts by weight of carbon black,
less than 7 parts by weight of silica,
at least 10 parts by weight of a recovered carbon black.

**2.** Composition to claim 1, comprising, for 100 parts by weight of the composition, less than 6 parts by weight of silica.

**3.** Composition according to one of claims 1 to 2, comprising for 100 parts of fillers present in the composition, between 20 and 50 parts of recovered carbon black.

**4.** Composition according to one of claims 1 to 3, comprising for 100 parts by weight of the composition, at least:
60 and 70 parts by weight of a rubber matrix,
between 0 and 13 parts by weight of carbon black,
between 0 and 6 parts by weight of silica,
between 10 and 30 parts by weight of recovered carbon black.

**5.** Composition according to claim 4, comprising for 100 parts by weight of the composition, at least:
60 and 70 parts by weight of a rubber matrix,
between 5 and 13 parts by weight of carbon black,
between 2 and 6 parts by weight of silica,
between 10 and 30 parts by weight of recovered carbon black.

**6.** Composition according to any preceeding claims, wherein the recovered carbon black comprises between 20 and 35 parts by weight of silica.

**7.** Composition according to claim 6, wherein recovered carbon black comprises between 25 and 30 parts by weight of silica.

**8.** Composition according to any preceeding claims, comprising between 0 and 5 parts by weight of N700 and N600 as carbon black.

**9.** Composition according to any preceeding claims, wherein the recovered carbon black presents an external surface area greater than 70 square meters per gram.

**10.** Composition according to any preceeding claims, wherein the recovered carbon black presents a total surface area greater than 80 square meters per gram.

**11.** Composition according to any preceeding claims, wherein the recovered carbon black presents less than 1 part of weight of benzo-α-pyrene.

**13.** Tyre manufactured from a composition according to any preceeding claims.

**14.** Tyre according to claim 13, wherein the tyre is a vehicle tyre.

**15.** Tyre according to claim 13 or claim 14, wherein the tyre is a car tyre or a truck tyre.
